# DEMANDE DE BREVET EUROPEEN

(11) **EP 4 603 720 A1**
(43) Date de publication de la demande: **20.08.2025**
(21) Numéro de dépôt: 25155927.4
(22) Date de dépôt: 05.02.2025
(51) Int. Cl.: F16F 15/123, F16F 15/134

(54) **SIÈGE ET AMORTISSEUR DE TORSION L'INCLUANT**

(30) Priorité: 14.02.2024 FR 2401460
(71) Demandeur: VALEO EMBRAYAGES, 80009 Amiens (FR)
(72) Inventeur: CAVAIOTTI, Fabrice, 80009 Amiens (FR); BOUCHEZ, Olivier, 80009 Amiens (FR); FESSELET, Xavier, 80009 Amiens (FR)
(74) Mandataire: Valeo Powertrain Systems

(57) **Abrégé**

L'invention a pour objet un siège (32) destiné à être placé sur une extrémité d'un premier ressort (20), notamment d'un dispositif d'amortissement de torsion pour un véhicule, comprenant
- une partie dorsale (34) comprenant un corps (35), adapté pour coopérer avec l'extrémité du premier ressort, et un tronçon de barreau (43) formant une surface adaptée pour être un élément d'une liaison pivot ; et
- une partie frontale (33) adaptée pour s'associer à la partie dorsale (34) par complémentarité de forme.

## Description

L'invention concerne des sièges pour ressorts intégrés en particulier dans des amortisseurs de torsion d'une ligne de transmission d'un véhicule. L'invention concerne aussi des dispositifs d'amortissement de torsion comportant de tels sièges.

Un dispositif d'amortissement de torsion intégré à une friction d'embrayage est connu. Ce dispositif comporte un ensemble de ressorts dont les extrémités coopèrent avec le reste du dispositif à travers des sièges monoblocs métalliques. Plus précisément, le dispositif d'amortissement de torsion comporte deux parties coaxiales montées rotatives l'une par rapport à l'autre à rencontre des ressorts précédemment cités qui interviennent de manière circonférentielle, les sièges monoblocs métalliques intervenant entre, d'une part, l'une au moins des extrémités de ressort et, d'autre part, l'une et/ou l'autre des parties coaxiales. Pour cela, chaque siège monobloc métallique comprend une partie frontale assurant l'appui et/ou le centrage de l'extrémité du ressort ou de l'ensemble de ressort avec le(s)quel(s) il coopère, et une partie dorsale adossée à la partie frontale présentant un tronçon de barreau s'étendant en saillie réalisant une liaison pivot avec l'une et/ou l'autre des parties coaxiales.

Or, ces sièges monoblocs sont coûteux à fabriquer. De plus, leur masse est importante ce qui complique leur mise en application par rapport aux exigences de réduction globale de la masse de la friction d'embrayage.

La présente invention vise notamment à améliorer encore les sièges des dispositifs d'amortissement de torsion.

A cet effet, on prévoit, selon l'invention, un siège destiné à être placé sur une extrémité d'un premier ressort, notamment d'un dispositif d'amortissement de torsion pour un véhicule, comprenant :
- une partie dorsale comprenant un corps, adapté pour coopérer avec l'extrémité du premier ressort, et un tronçon de barreau formant une surface adaptée pour être un élément d'une liaison pivot ; et,
- une partie frontale adaptée pour s'associer à la partie dorsale par complémentarité de forme.

Ainsi, le siège selon l'invention est en deux parties ou bi-blocs (i.e. le siège n'est pas monobloc). Ces deux blocs du siège offrent une large variété de forme permettant de réduire la masse du siège et d'en faciliter la fabrication tout en s'opposant à la centrifugation du premier ressort et en permettant audit premier ressort de travailler dans de bonnes conditions, même à plein couple, en conservant un parallélisme entre ses extrémités. L'invention permet d'obtenir des sièges économiques et légers sans qu'il ne soit sacrifié à leur efficacité.

La diminution de la masse des sièges a un impact direct sur la réduction de la consommation de carburant et sur l'amélioration du recyclage desdits sièges. En outre, la diminution de la masse des sièges permet également une réduction de l'inertie du dispositif d'amortissement de torsion.

Les deux parties distinctes du siège permettent de faciliter la conception et la fabrication de chacune desdites parties, chacune des pièces pouvant avoir un processus de fabrication dédié. En outre, les deux parties s'assemble simplement, i.e. par complémentarité de forme, permettant une mise en place rapide, simple et efficace du siège. De plus, la fabrication d'un siège en deux parties permet de standardiser l'une des parties, de préférence la partie dorsale, permettant d'avoir une unique référence quels que soit les produits proposés et de n'adapter que l'autre des parties, de préférence la partie frontale, aux dimensions précises desdits produits

Selon l'un des aspects de l'invention, le tronçon de barreau forme une surface cylindrique. Ainsi, la liaison pivot est optimisée.

Selon l'un des aspects de l'invention, la partie frontale est indépendante de la partie dorsale. Ainsi, la partie frontale n'est pas rigidement solidaire de la partie dorsale, par exemple par collage ou soudure, avant montage. Cette liberté entre les deux parties du siège permet de faciliter le montage ou le démontage du siège dans le dispositif d'amortissement de torsion.

Selon l'un des aspects de l'invention, la partie frontale est constituée au moins partiellement d'un premier matériau et la partie dorsale est constituée au moins partiellement d'un deuxième matériau, différent du premier matériau. Ainsi, il est possible de choisir la matière la plus adaptée pour chacune des parties du siège en prenant en comptes les contraintes liées à leur fonction tout en cherchant à diminuer la masse et les coûts de fabrication du siège.

Selon l'un des aspects de l'invention, la partie frontale du siège est au moins en partie en matière synthétique. Ainsi, le poids et le coût de fabrication du siège sont réduits tout en ne sacrifiant pas à son efficacité.

Selon un autre des aspects de l'invention, la partie frontale du siège est intégralement en matière synthétique. Ainsi, le poids et le coût de fabrication du siège sont encore réduits tout en ne sacrifiant pas à son efficacité.

Selon l'un des aspects de l'invention, la partie dorsale du siège est au moins en partie en métal. Ainsi, l'efficacité du siège est maintenue à son optimum.

Selon un autre des aspects de l'invention, la partie dorsale du siège est intégralement en métal. Ainsi, l'efficacité du siège est maintenue à son optimum.

Selon l'un des aspects de l'invention, le corps de la partie dorsale comprend au moins une excroissance, s'étendant perpendiculairement depuis un bord dudit corps, adaptée pour guider le premier ressort. Ainsi, le premier ressort prend appui sur le corps de la partie dorsale et l'au moins une excroissance permet de guider ledit premier ressort afin que ce dernier ne centrifuge pas. L'au moins une excroissance s'étend perpendiculairement, ou radialement, par rapport à la surface principale du corps de la partie dorsale.

Selon l'un des aspects de l'invention, le corps de la partie dorsale comprend au moins deux excroissances, de préférence quatre excroissances, opposées deux à deux. Ainsi, le premier ressort est parfaitement guidé.

Selon l'un des aspects de l'invention, le tronçon de barreau est tubulaire et présente, en regard de la partie frontale, une section transversale ouverte. Ainsi, la masse de la partie dorsale est limitée tout en ne sacrifiant pas à son efficacité.

Selon l'un des aspects de l'invention, la partie frontale comprend un corps adapté pour assurer au moins l'un parmi un centrage du premier ressort, un centrage d'un deuxième ressort interne au premier ressort et un appui du deuxième ressort.

Selon l'un des aspects de l'invention, le corps de la partie frontale présente une forme en croix. Ainsi, la forme du corps est optimisée entre sa fonction de centrage et la diminution au maximum de sa masse.

Selon l'un des aspects de l'invention, le corps de la partie frontale comprend au moins une première nervure, solidaire d'un premier bord dudit corps et s'étendant radialement par rapport à celui-ci, et adaptée pour s'insérer dans une première rainure formée sur le corps de la partie dorsale. Ainsi, la partie dorsale et la partie frontale s'emboitent l'une dans l'autre par complémentarité de forme. En outre, la première nervure est adaptée pour assurer un maintien axial du siège lors du battement angulaire avec compression du premier ressort.

Selon l'un des aspects de l'invention, le corps de la partie frontale comprend deux premières nervures, s'étendant en regard l'une de l'autre.

Selon l'un des aspects de l'invention, le corps de la partie frontale comprend en outre au moins une deuxième nervure, solidaire d'un deuxième bord dudit corps, opposée au premier bord, et s'étendant radialement par rapport audit corps, la deuxième nervure étant adaptée pour s'insérer dans une deuxième rainure formée sur le corps de la partie dorsale. Ainsi, la partie dorsale et la partie frontale s'emboitent l'une dans l'autre par complémentarité de forme. En outre, la deuxième nervure est adaptée pour assurer un maintien axial du siège lors du battement angulaire avec compression du premier ressort.

Selon l'un des aspects de l'invention, le corps de la partie frontale comprend deux deuxième nervures, s'étendant en regard l'une de l'autre.

Selon l'un des aspects de l'invention, le premier ressort est en appui sur l'au moins une première nervure et sur l'au moins une deuxième nervure. Ainsi, le premier ressort permet de maintenir la partie dorsale et la partie frontale ensemble.

L'invention concerne encore un dispositif d'amortissement de torsion, notamment pour un véhicule, comprenant deux parties coaxiales montées rotatives l'une par rapport à l'autre à l'encontre d'au moins un premier ressort avec, interposé circonférentiellement entre une des extrémités dudit premier ressort et l'une des parties coaxiales, un siège tel que décrit précédemment, la partie dorsale du siège étant adaptée pour assurer un appui dudit premier ressort et pour prendre lui-même appui sur ladite partie coaxiale et la partie frontale du siège étant adaptée pour s'associer à la partie dorsale par complémentarité de forme.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig.1] La [Fig. 1] est une vue de face en semi perspective d'une friction d'embrayage comprenant des sièges selon l'invention ;
[Fig.2] La [Fig.2] est une vue partielle d'un agrandissement de la [Fig.1] ;

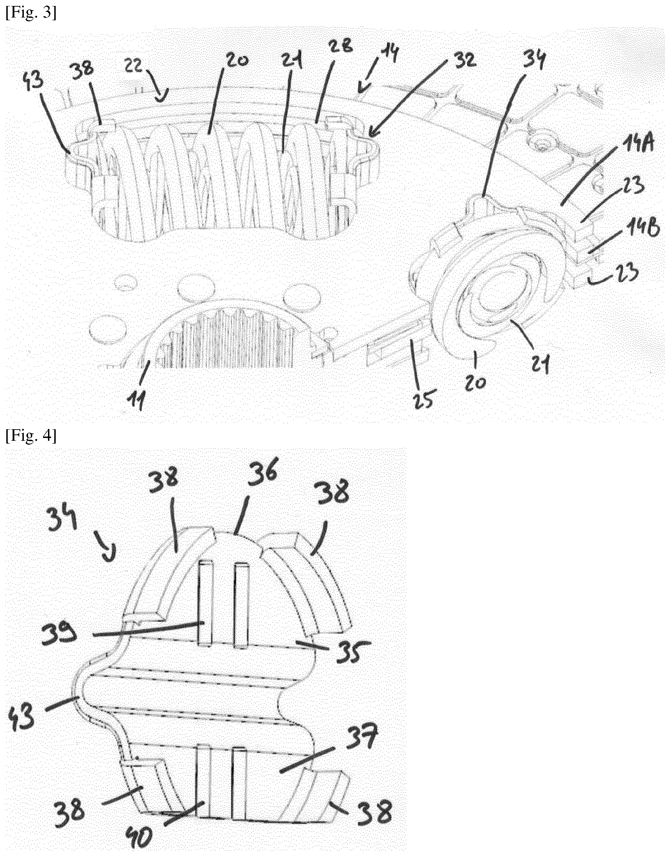

[Fig.3] La [Fig.3] est identique à la [Fig.2] avec une alternative de réalisation du siège selon l'invention ;
[Fig.4] La [Fig.4] est une vue de face en perspective de la partie dorsale du siège selon l'invention ;

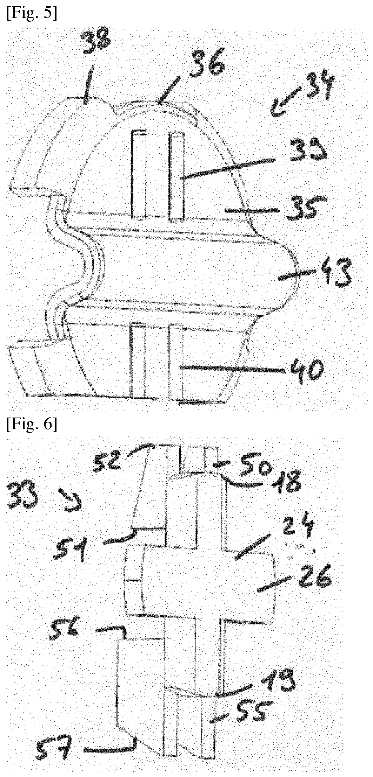

[Fig.5] La [Fig.5] est une vue de dos en perspective de la partie dorsale de la [Fig.4] ;
[Fig.6] La [Fig.6] est une vue de face en perspective de la partie frontale du siège selon l'invention ;

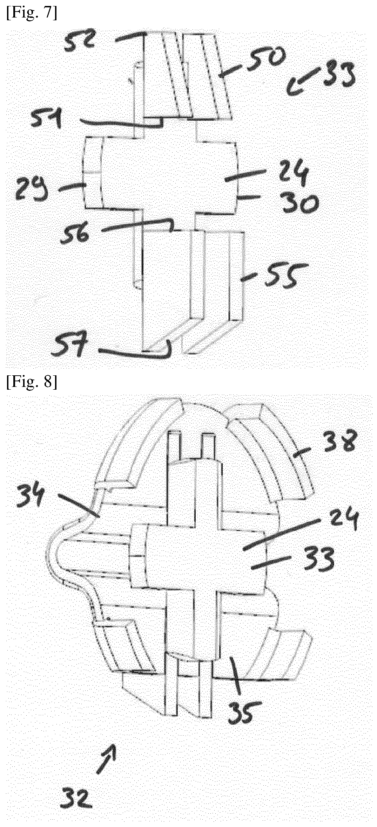

[Fig.7] La [Fig.7] est une vue de dos en perspective de la frontale de la [Fig.6] ;
[Fig.8] La [Fig.8] est une vue de face en perspective du siège selon l'invention ;

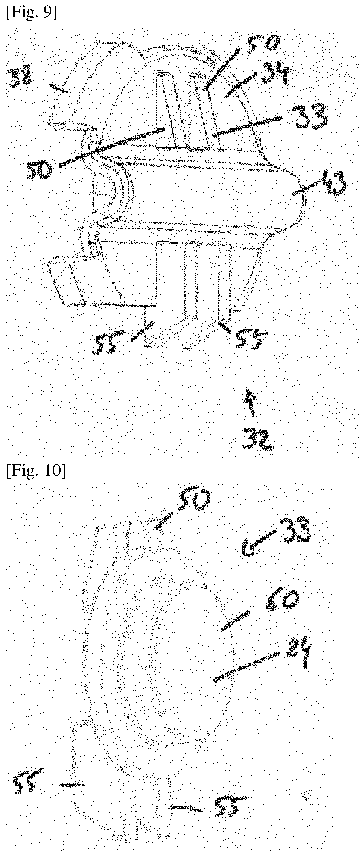

[Fig.9] La [Fig.9] est une vue de dos en perspective du siège de la [Fig.8] ;
[Fig.10] La [Fig.10] est une vue de face en perspective de la partie frontale du siège selon l'alternative de réalisation de la [Fig.3] ;

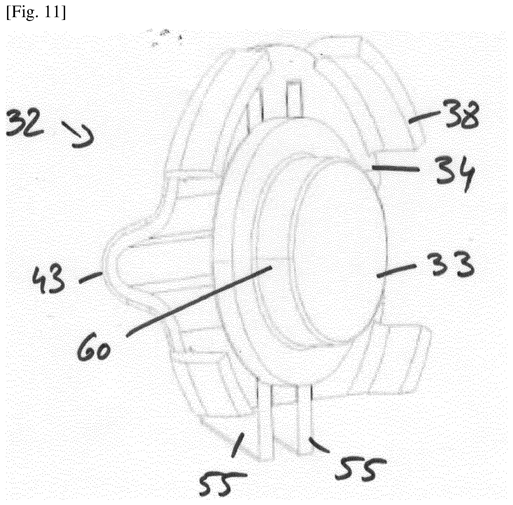

[Fig.11] La [Fig.11] est une vue de face en perspective du siège comprenant la partie frontale de la [Fig.10].

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieure.

Dans la description et les revendications, on utilisera, les termes "extérieur" et "intérieur" ainsi que les orientations "axiale", "radiale" et pour désigner, selon les définitions données dans la description, des éléments du dispositif d'amortissement de torsion. L'axe de rotation X détermine l'orientation "axiale". L'orientation "radiale" est dirigée orthogonalement à l'axe de rotation X. L'orientation "circonférentielle" est dirigée orthogonalement à l'axe de rotation X et orthogonalement à la direction radiale. Par ailleurs, les angles et secteurs angulaires exprimés sont définis en relation avec l'axe de rotation X. Les termes "extérieur" et "intérieur" sont utilisés pour définir la position relative d'un composant par rapport à un autre, par référence à l'axe de rotation X, un composant proche dudit axe est ainsi qualifié d'intérieur par opposition à un composant extérieur situé radialement en périphérie.

Par « véhicule», on entend les véhicules automobiles, qui comprennent non seulement les véhicules passagers mais également les véhicules industriels, ce qui comprend notamment les poids lourds, les véhicules de transport en commun ou les véhicules agricoles, mais également tout engin de transport permettant de faire passer d'un point à un autre un être vivant et/ou un objet ou tout engin immobile réalisant un travail mécanique.

Les adjectifs numéraux ordinaux sont utilisés pour différencier les caractéristiques. Ils ne définissent pas la position d'une caractéristique. Par conséquent, par exemple, une troisième caractéristique d'un produit ne signifie pas que le produit possède une première et/ou une deuxième caractéristique.

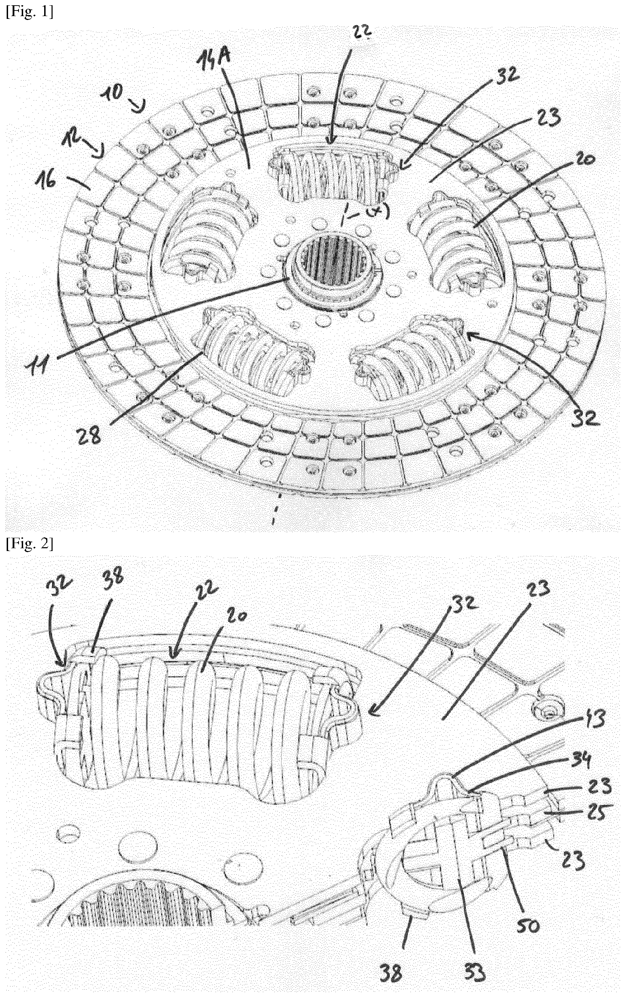

La [Fig.1] représente, à titre d'exemple, l'application de l'invention à une friction d'embrayage 10, notamment pour véhicule.

La friction d'embrayage 10 peut comprendre un moyeu 11 et un disque de friction 12, avec, intervenant entre ceux-ci, un dispositif d'amortissement de torsion 14.

Le disque de friction 12 peut être adapté pour être calé en rotation sur un arbre menant, ou vilebrequin, lié au moteur du véhicule. Le moyeu 11 peut être adapté pour être calé en rotation sur un arbre mené, lié à la boîte de vitesses. Le moyeu 11 peut être mobile en rotation autour d'un axe de rotation X.

Le disque de friction 12 peut comprendre un voile et, pour serrage entre les deux plateaux d'un embrayage non représenté, deux garnitures de frottement 16 rapportées chacune respectivement à la périphérie du voile, de part et d'autre de celui-ci. Le voile peut être mince, éventuellement fragmenté en pales.

Le dispositif d'amortissement de torsion 14 est adapté pour intervenir aux couples élevés. Le dispositif d'amortissement de torsion 14 peut comprendre deux parties coaxiales 14A, 14B, qui, dans les limites d'un débattement angulaire déterminé, sont montées rotatives l'une par rapport à l'autre à l'encontre de dispositifs amortisseur 22 intervenant circonférentiellement entre elles. Chaque dispositif amortisseur 22 peut comprendre un unique premier ressort 20. Le premier ressort 20 peut être un ressort hélicoïdal.

Alternativement, chaque dispositif amortisseur 22 peut comprendre un premier ressort 20 et un deuxième ressort 21, interne au premier ressort 20. Le premier ressort 20 est le ressort externe ou le ressort de plus grand diamètre. Le deuxième ressort 21 est le ressort interne ou le ressort de plus petit diamètre. Ainsi, le diamètre extérieur du deuxième ressort est plus petit que le diamètre intérieur du premier ressort 20. Le premier et le deuxième ressort sont coaxiaux. Le deuxième ressort 21 peut être un ressort hélicoïdal. Le deuxième ressort 21 peut présenter une raideur plus faible que la raideur du premier ressort 20. Chaque dispositif amortisseur 22 peut en outre comprendre un troisième ressort situé axialement entre le premier et le deuxième ressort. Les trois ressorts sont coaxiaux. Le troisième ressort peut être un ressort hélicoïdal.

La partie coaxiale 14A peut comprendre deux rondelles de guidage 23. Les deux rondelles de guidage 23 peuvent être parallèles l'une à l'autre, de préférence à distance l'une de l'autre. Les deux rondelles de guidage 23 peuvent être, à leur périphérie de plus petit diamètre, reliées, avec ou sans jeu, au moyeu 11 afin de transmettre le couple à celui-ci.

La partie coaxiale 14B peut comprendre un voile 25. Le voile 25 peut intervenir entre les rondelles de guidage 23. Le disque de friction 12 peut être fixé au voile 25.

Il est possible d'inverser la structure, le voile 25 engrenant avec jeu, par exemple via une denture, le moyeu 11 tandis que les rondelles de guidage 23 sont montées libres en rotation par rapport au moyeu 11 en étant reliées entre elles et solidaires du disque de friction 12, celui-ci étant par exemple fixé par rivetage à l'une d'entre elles.

Le dispositif d'amortissement de torsion 14 peut comprendre une pluralité de dispositif amortisseur 22. Dans l'exemple représenté à la [Fig.1], le dispositif d'amortissement de torsion 14 comprend cinq dispositifs amortisseurs 22. Les dispositifs amortisseurs 22 peuvent être régulièrement répartis circonférentiellement, en étant tous allongés sensiblement tangentiellement à une même circonférence de l'ensemble. Les dispositifs amortisseurs 22 peuvent être chacun logés dans un logement 28. Le logement 28 peut être formé par une fenêtre réalisée sur les rondelles de guidage 23 et par une fenêtre réalisée sur le voile 25.

Entre l'une au moins des extrémités du premier ressort 20 et l'une et/ou l'autre des parties coaxiales 14A, 14B, peut être interposé, circonférentiellement, un siège 32. Le siège 32 peut comprendre une partie frontale 33 et une partie dorsale 34.

Le siège 32 peut être bi-bloc. La partie frontale 33 et la partie dorsale 34 peuvent être indépendantes l'une de l'autre. Avant montage dans le dispositif d'amortissement de torsion 14, la partie frontale 33 n'est pas rigidement solidaire de la partie dorsale 34. Chacune des parties peut être fabriquée indépendamment de l'autre des parties et avoir un processus de fabrication, une forme et/ou un matériau qui lui est propre.

Alternativement, le siège 32 peut être composé d'une pluralité de parties ou de blocs. Par exemple, la partie frontale 33 peut être composée d'une pluralité de blocs. La partie dorsale 34 peut être composée d'une pluralité de blocs.

La partie frontale 33 et la partie dorsale 34 peuvent être assemblées par complémentarité de forme. La partie dorsale 34 peut assurer l'appui su premier ressort 20. La partie dorsale 34 peut en outre prendre appui sur l'une et/ou l'autre des parties coaxiales 14A, 14B, en étant montée pivotante par rapport à celles-ci autour d'un axe parallèle à leur propre axe, et, donc, à l'axe de rotation X du moyeu 11. La partie frontale peut assurer le centrage du premier ressort 20. Alternativement, la partie frontale 33 peut assurer l'appui et/ou le centrage du deuxième ressort 21.

Un siège 32 peut être installé à chacune des extrémités des dispositifs amortisseurs 22.

Tous les sièges 32 peuvent être identiques entre eux.

La partie frontale 33 peut comprendre un corps 24. Le corps 24 peut s'étendre selon la direction axiale entre une première extrémité 29 et une deuxième extrémité 30. Le corps 24 peut s'étendre selon la direction radiale entre un premier bord 18 et un deuxième bord 19. Le corps 24 peut former une croix, la première branche de la croix s'étendant entre la première extrémité 29 et la deuxième extrémité 30 et la deuxième branche de la croix s'étendant entre le premier bord 18 et le deuxième bord 19. Chacun des bords et extrémités est adapté pour assurer le centrage du premier ressort 20. Chacun des bords et extrémités peut en outre ou alternativement assurer l'appui du deuxième ressort 21. Chacun des bords et extrémités peut en outre ou alternativement assurer le centrage du deuxième ressort 21. Le corps 24 peut présenter une première surface 26, en regard du premier ressort 20, plane. Le corps 24 peut présenter une deuxième surface, opposée à la première surface 26, plane.

Alternativement, le corps 24 peut présenter une forme circulaire. La première surface 26 peut comprendre une section en gradins 60 pour le centrage du premier ressort 20. Alternativement ou en complément, la section en gradins 60 peut permettre l'appui et/ ou le centrage du deuxième ressort 21. La première surface 26 du corps 24 peut comprendre un unique gradin 60. Alternativement, la première surface 26 du corps 24 peut comprendre, annulairement, et de manière concentrique, deux gradins 60. Le gradin 60 le plus externe assurant le centrage du premier ressort 20, et le gradin 60 le plus interne assurant l'appui et le centrage du deuxième ressort 21.

Chacun des gradins 60 peut comprendre, perpendiculairement à l'axe du premier ressort 20 au repos, une portion transversale pour l'appui du premier ou deuxième ressort concerné, et, parallèlement à cet axe, une portion axiale pour le centrage de ce ressort.

La partie frontale 33 peut en outre comprendre au moins une première nervure 50. La première nervure 50 peut s'étendre radialement entre une extrémité intérieure 51 et une extrémité extérieure 52. La première nervure 50 peut être solidaire du corps 24. Plus particulièrement, la première nervure 50 peut être solidaire du premier bord 18. L'extrémité intérieure 51 de la première nervure 50 peut être solidaire du premier bord 18 du corps 24. Alternativement, une portion intermédiaire de la première nervure, située entre l'extrémité intérieure 51 et l'extrémité extérieure 52, peut être solidaire du premier bord 18. La première nervure 50 peut être décalée circonférentiellement du corps 24. La première nervure 50 peut s'étendre circonférentiellement entre une première extrémité au moins en partie solidaire du corps 24 et une deuxième extrémité libre. La première extrémité de la première nervure 50 peut être plane. La première extrémité de la première nervure 50 peut être parallèle au corps 24. La deuxième extrémité libre de la première nervure 50 peut être plane. La deuxième extrémité libre de la première nervure 50 peut être tangentielle au corps 24.

De préférence, la partie frontale 33 peut comprendre une paire de première nervure 50, parallèles l'une à l'autre, de préférence à distance l'une de l'autre.

La partie frontale 33 peut en outre comprendre au moins une deuxième nervure 55. La deuxième nervure 55 peut s'étendre radialement entre une extrémité intérieure 56 et une extrémité extérieure 57. La deuxième nervure 55 peut être solidaire du corps 24. Plus particulièrement, la deuxième nervure 55 peut être solidaire du deuxième bord 19. L'extrémité intérieure 56 de la deuxième nervure 55 peut être solidaire du deuxième bord 19 du corps 24. Alternativement, une portion intermédiaire de la deuxième nervure, située entre l'extrémité intérieure 56 et l'extrémité extérieure 57, peut être solidaire du deuxième bord 19. La deuxième nervure 55 peut être décalée circonférentiellement du corps 24. La deuxième nervure 55 peut s'étendre circonférentiellement entre une première extrémité au moins en partie solidaire du corps 24 et une deuxième extrémité libre. La première extrémité de la deuxième nervure 55 peut être plane. La première extrémité de la deuxième nervure 55 peut être parallèle au corps 24. La deuxième extrémité libre de la deuxième nervure 55 peut être plane. La deuxième extrémité libre de la deuxième nervure 50 peut être parallèle au corps 24.

De préférence, la partie frontale 33 peut comprendre une paire de deuxième nervure 55, parallèles l'une à l'autre, de préférence à distance l'une de l'autre.

La première nervure 50 et la deuxième nervure 55 peuvent s'étendent axialement entre le voile 25 et les rondelles de guidage 23, leur écart axial étant fonction de l'épaisseur du voile 25. La première nervure 50 et la deuxième nervure 55 ont pour fonction de caler axialement les sièges 32 sur le voile 25, pour éviter qu'ils échappent aux logements 28 du dispositif amortisseur 22.

La partie frontale 33 peut être réalisée par un processus de forge. Alternativement, la partie frontale 33 peut être réalisée par un processus de frappe à froid.

La partie dorsale 34 peut comprendre un corps 35. Le corps 35 peut être au moins partiellement circulaire. Le corps 35 peut être circulaire avec une portion plane. Le corps 35 peut présenter un bord 36 continu. Le corps 35 peut présenter une première surface 37, en regard du premier ressort 20, plane. La surface 37 peut être adaptée pour servir d'appui au premier ressort 20. Le corps 35 peut présenter une deuxième surface, opposée à la première surface 37, plane. La deuxième surface peut être au contact de l'une et/ou l'autre des parties coaxiales 14A, 14B.

Le corps 35 peut en outre comprendre un tronçon de barreau 43. Le tronçon de barreau 43 peut être une partie du cops 35, plus particulièrement une partie de deuxième surface du corps 35. Le tronçon de barreau 46 peut être adapté pour l'appui sur l'une et/ou l'autre des parties coaxiales 14A, 14B. Le tronçon de barreau 43 peut faire saillie depuis la deuxième surface du corps 35. Le tronçon de barreau 43 peut s'étendre axialement, c'est-à-dire parallèlement à l'axe de rotation X du moyeu 11. Le tronçon de barreau 43 peut présenter, au moins localement, une surface cylindrique. La surface cylindrique peut être de section transversale courbe.

Le tronçon de barreau 43 peut être formé par embouti sur le corps 35.

Par cette partie dorsale 34, le siège 32 peut être en prise, à basculement, avec une encoche, de profil courbe, sur un des bords radiaux des fenêtres des rondelles de guidage 23 de la partie coaxiale 14A, et/ou avec une encoche, de profil courbe, sur l'un des bords radiaux des fenêtres du voile 25 de la partie coaxiale 14B. Les profils des encoches peuvent être complémentaires du profil du tronçon de barreau 43.

Par ce basculement, les sièges 32 permettent avantageusement aux extrémités des dispositifs amortisseurs 22 de demeurer sensiblement parallèles l'une à l'autre en service. Au repos, ils sont en appui sur la partie radialement la plus intérieure des bords radiaux des fenêtres des rondelles de guidage 23. Au terme du débattement angulaire entre celles-ci et le voile 25, ils sont en appui contre la partie radialement la plus extérieure de ces bords radiaux.

Le tronçon de barreau 43 peut présenter une section transversale de sa surface cylindrique circulaire.

Le tronçon de barreau 43 peut être tubulaire. La section transversale peut être circulairement fermée. De préférence, comme visible sur les figures, la section transversale du tronçon de barreau 43 peut être ouverte du côté de la partie frontale 33, suivant un angle d'ouverture inférieur à 180°.

Le tronçon de barreau 43 peut former un insert sur lequel au moins une partie du corps 24 de la partie frontale 33 peut être inséré. Le corps 24 de la partie frontale 33 peut envahir intégralement le volume intérieur du tronçon de barreau 43. De préférence, le corps 24 de la partie frontale 33 peut envahir partiellement le volume intérieur du tronçon de barreau 43.

En variante, le tronçon de barreau 43 peut être plein.

Lorsque le tronçon de barreau 43 est plein, la matière du corps 24 de la partie frontale 33 l'enrobe.

La première nervure 50 et la deuxième nervure 55 de la partie frontale 33 peuvent être disposées, en regard l'une de l'autre, de part et d'autre du tronçon de barreau 43. La première nervure 50 et/ou la deuxième nervure 55 peut s'étendent sur une portion au moins du tronçon de barreau 43, par exemple en épousant au moins localement la forme de celui-ci. La première nervure 50 et la deuxième nervure 55 peuvent permettre d'encliqueter le tronçon de barreau 43 avec la partie frontale 33. Pour ce faire, la première nervure 50 et la deuxième nervure 55 peuvent s'étendent légèrement en biais, en convergeant l'une vers l'autre de part et d'autre du tronçon de barreau 43. Dans ce mode de réalisation, la partie frontale 33 n'est pas indépendante de la partie dorsale 34.

Alternativement, la première nervure 50 et la deuxième nervure 55 de la partie frontale 33 peuvent être à distance du tronçon de barreau 43. Le premier ressort 20 peut exercer une pression sur la première nervure 50 et la deuxième nervure 55 afin de maintenir la partie frontale 33 avec la partie dorsale 34.

La partie dorsale 34 peut en outre comprendre au moins une excroissance 38. L'excroissance 38 peut s'étendre circonférentiellement. L'excroissance 38 peut s'étendre perpendiculairement au corps 35 entre une première extrémité solidaire dudit corps 35 et une deuxième extrémité libre. L'excroissance 38 est adaptée pour guider le premier ressort 20. L'excroissance 38 peut avoir une forme courbe. La forme de l'excroissance 38 peut être adaptée pour épouser la forme des spires du premier ressort 20.

De préférence, la partie dorsale 34 peut comprendre une paire d'excroissance 38, de préférence opposées deux à deux. Plus particulièrement, la partie dorsale 34 peut comprendre deux paires d'excroissance 38, de préférence opposées deux à deux.

La partie dorsale 34 peut en outre comprendre au moins une première rainure 39. Plus particulièrement, le corps 35 de la partie dorsale 34 peut comprendre au moins une première rainure 39. La première rainure 39 peut être traversante. La première rainure 39 peut être fermée. La première rainure 39 est adaptée pour recevoir, par complémentarité de forme, la première nervure 50.

De préférence, la partie dorsale 34 peut comprendre une paire de première rainure 39, parallèles l'une à l'autre, de préférence à distance l'une de l'autre.

La partie dorsale 34 peut en outre comprendre au moins une deuxième rainure 40. Plus particulièrement, le corps 35 de la partie dorsale 34 peut comprendre au moins une deuxième rainure 40. La deuxième rainure 40 peut être traversante. La deuxième rainure 40 peut être ouverte sur au moins une de ses extrémités, de préférence son extrémité intérieure. La deuxième rainure 40 est adaptée pour recevoir, par complémentarité de forme, la deuxième nervure 55.

De préférence, la partie dorsale 34 peut comprendre une paire de deuxième rainure 40, parallèles l'une à l'autre, de préférence à distance l'une de l'autre.

Suivant l'invention, la partie frontale 33 des sièges 32 peut être au moins en partie réalisée dans une première matière. Alternativement, la partie frontale 33 peut être intégralement réalisée dans cette première matière. La partie dorsale 34 des sièges 32 peut être au moins en partie réalisée dans une deuxième matière. Alternativement, la partie dorsale 34 peut être intégralement réalisée dans cette deuxième matière. La première matière peut être différente de la deuxième matière. La première matière peut être une matière synthétique, par exemple du plastique ou du polyamide de type 6.6. La deuxième matière peut être du métal tel qu'un acier à haut pourcentage de carbone ou de l'aluminium.

## Revendications

1. Siège (32) destiné à être placé sur une extrémité d'un premier ressort (20), notamment d'un dispositif d'amortissement de torsion (14) pour un véhicule, comprenant :
- une partie dorsale (34) comprenant un corps (35), adapté pour coopérer avec l'extrémité du premier ressort, et un tronçon de barreau (43) formant une surface adaptée pour être un élément d'une liaison pivot ; et
- une partie frontale (33) adaptée pour s'associer à la partie dorsale (34) par complémentarité de forme.

2. Siège (32) selon la revendication précédente, dans lequel la partie frontale (33) est indépendante de la partie dorsale (34).

3. Siège (32) selon l'une quelconque des revendications précédentes, dans lequel la partie frontale (33) est constituée au moins partiellement d'un premier matériau et la partie dorsale (34) est constituée au moins partiellement d'un deuxième matériau, différent du premier matériau.

4. Siège (32) selon l'une quelconque des revendications précédentes, dans lequel le corps (35) de la partie dorsale (34) comprend au moins une excroissance (38), s'étendant perpendiculairement depuis un bord (36) dudit corps (35), adaptée pour guider le premier ressort (20).

5. Siège (32) selon l'une quelconque des revendications précédentes, dans lequel le tronçon de barreau (43) est tubulaire et présente, en regard de la partie frontale (33), une section transversale ouverte.

6. Siège (32) selon l'une quelconque des revendications précédentes, dans lequel la partie frontale (33) comprend un corps (24) adapté pour assurer au moins l'un parmi un centrage du premier ressort (20), un centrage d'un deuxième ressort (21) interne au premier ressort et un appui du deuxième ressort.

7. Siège (32) selon la revendication précédente, dans lequel le corps (24) de la partie frontale (33) comprend au moins une première nervure (50), solidaire d'un premier bord (18) dudit corps (24) et s'étendant radialement par rapport à celui-ci, et adaptée pour s'insérer dans une première rainure (39) formée sur le corps (35) de la partie dorsale (34).

8. Siège (32) selon la revendication précédente, dans lequel le corps (24) de la partie frontale (33) comprend en outre au moins une deuxième nervure (55), solidaire d'un deuxième bord (19) dudit corps (24), opposée au premier bord (18), et s'étendant radialement par rapport audit corps, la deuxième nervure (55) étant adaptée pour s'insérer dans une deuxième rainure (40) formée sur le corps (35) de la partie dorsale (34).

9. Siège (32) selon la revendication précédente, dans lequel le premier ressort (20) est en appui sur l'au moins une première nervure (50) et sur l'au moins une deuxième nervure (55).

10. Dispositif d'amortissement de torsion (14), notamment pour un véhicule, comprenant deux parties coaxiales (14A, 14B) montées rotatives l'une par rapport à l'autre à l'encontre d'au moins un premier ressort (20) avec, interposé circonférentiellement entre une des extrémités dudit premier ressort (20) et l'une des parties coaxiales (14A, 14B), un siège (32) selon l'une quelconque des revendications précédentes, la partie dorsale (34) du siège (32) étant adaptée pour assurer un appui dudit premier ressort et pour prendre lui-même appui sur ladite partie coaxiale, et la partie frontale (33) du siège (32) étant adaptée pour s'associer à la partie dorsale (34) par complémentarité de forme.
